(19) **Europäisches Patentamt European Patent Office Office européen des brevets**

(11) **EP 4 509 630 A1**

(12) **EUROPEAN PATENT APPLICATION**
published in accordance with Art. 153(4) EPC

(43) Date of publication:
**19.02.2025 Bulletin 2025/08**

(21) Application number: **23835106.8**

(22) Date of filing: **08.03.2023**

(51) International Patent Classification (IPC):
*C22C 38/00* (2006.01)    *C21D 8/10* (2006.01)
*C21D 9/08* (2006.01)    *C22C 38/52* (2006.01)
*C22C 38/60* (2006.01)

(52) Cooperative Patent Classification (CPC):
**C21D 8/10; C21D 9/08; C22C 38/00; C22C 38/52; C22C 38/60**

(86) International application number:
**PCT/JP2023/008929**

(87) International publication number:
**WO 2024/009565 (11.01.2024 Gazette 2024/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.07.2022 JP 2022108572**

(71) Applicant: **JFE Steel Corporation Tokyo 100-0011 (JP)**

(72) Inventors:
 • **KAMO, Yuichi**
  **Tokyo 100-0011 (JP)**
 • **IDE, Shinsuke**
  **Tokyo 100-0011 (JP)**
 • **SUGAHARA, Koki**
  **Tokyo 100-0011 (JP)**

(74) Representative: **Haseltine Lake Kempner LLP One Portwall Square Portwall Lane Bristol BS1 6BH (GB)**

(54) **SEAMLESS STAINLESS STEEL PIPE AND PRODUCTION METHOD THEREFOR**

(57)    Provided is a stainless steel seamless pipe having high strength and excellent low-temperature toughness and corrosion resistance. The stainless steel seamless pipe comprises: a predetermined chemical composition; 30 % or more martensite phase, 50 % or less ferrite phase, and 40 % or less retained austenite phase in volume fraction; a yield stress of 758 MPa or more; and a Charpy absorbed energy $vE_{-10}$ at -10 °C of 40 J or more.

**EP 4 509 630 A1**

**Description**

TECHNICAL FIELD

The present disclosure relates to a stainless steel seamless pipe suitable for use in oil wells and gas wells (hereafter simply referred to as oil wells). The present disclosure especially relates to a stainless steel seamless pipe with improved corrosion resistance in high-temperature severe corrosion environments containing carbon dioxide ($CO_2$) and chloride ions ($Cl^-$), environments containing hydrogen sulfide ($H_2S$), and the like.

BACKGROUND

Stainless steel seamless pipes are widely used for applications such as steel pipes for oil wells. Steel pipes for oil wells are required to have not only excellent yield stress but also excellent low-temperature toughness in view of recent oil field development in cold regions.

Given the possible depletion of energy resources in the near future, oil wells are actively developed in severe corrosion environments such as deep oil fields, environments containing carbon dioxide, and environments containing hydrogen sulfide called sour environments, which have not received much attention in the past. Hence, steel pipes for oil wells are also required to have high corrosion resistance.

Conventionally, 13Cr martensitic stainless steel pipes are commonly used as steel pipes for oil wells for mining in oil and gas fields in environments containing $CO_2$, $Cl^-$, etc. Recently, however, the development of oil wells of higher temperatures (up to 200 °C) is underway, and 13Cr martensitic stainless steel pipes sometimes lack corrosion resistance. There is thus a demand for a steel pipe for oil wells with higher corrosion resistance, which can be used even in such environments.

In response to this demand, for example, WO 2013/146046 A1 (PTL 1) proposes a stainless steel for oil wells having a composition containing, in mass%, C: 0.05 % or less, Si: 1.0 % or less, Mn: 0.01 % to 1.0 %, P: 0.05 % or less, S: less than 0.002 %, Cr: 16 % to 18 %, Mo: 1.8 % to 3 %, Cu: 1.0 % to 3.5 %, Ni: 3.0 % to 5.5 %, Co: 0.01 % to 1.0 %, Al: 0.001 % to 0.1 %, O: 0.05 % or less, and N: 0.05 % or less where Cr, Ni, Mo, and Cu satisfy a specific relationship.

WO 2017/168874 A1 (PTL 2) proposes a high-strength stainless steel seamless pipe for oil wells having a composition containing, in mass%, C: 0.005 % to 0.05 %, Si: 0.05 % to 0.50 %, Mn: 0.20 % to 1.80 %, P: 0.030 % or less, S: 0.005 % or less, Cr: 12.0 % to 17.0 %, Ni: 4.0 % to 7.0 %, Mo: 0.5 % to 3.0 %, Al: 0.005 % to 0.10 %, V: 0.005 % to 0.20 %, Co: 0.01 % to 1.0 %, N: 0.005 % to 0.15 %, and O: 0.010 % or less where Cr, Ni, Mo, Cu, C, Si, Mn, and N satisfy a specific relationship.

WO 2018/155041 A1 (PTL 3) proposes a high-strength stainless steel seamless pipe for oil wells having: a composition containing, in mass%, C: 0.05 % or less, Si: 0.5 % or less, Mn: 0.15 % to 1.0 %, P: 0.030 % or less, S: 0.005 % or less, Cr: 14.5 % to 17.5 %, Ni: 3.0 % to 6.0 %, Mo: 2.7 % to 5.0 %, Cu: 0.3 % to 4.0 %, W: 0.1 % to 2.5 %, V: 0.02 % to 0.20 %, Al: 0.10 % or less, N: 0.15 % or less, and B: 0.0005 % to 0.0100 % where C, Si, Mn, Cr, Ni, Mo, Cu, N, and W satisfies a specific relationship; and a microstructure containing, in volume fraction, more than 45 % martensite phase as a primary phase, 10 % to 45 % ferrite phase as a secondary phase, and 30 % or less retained austenite phase. According to PTL 3, such a high-strength stainless steel seamless pipe for oil wells has a strength of 862 MPa or more in yield stress YS, and exhibits sufficient corrosion resistance even in high-temperature severe corrosion environments containing $CO_2$, $Cl^-$, and $H_2S$.

WO 2021/065263 A1 (PTL 4) proposes a high-strength stainless steel seamless pipe for oil wells having: a composition containing, in mass%, C: 0.06 % or less, Si: 1.0 % or less, P: 0.05 % or less, S: 0.005 % or less, Cr: more than 15.7 % and 18.0 % or less, Mo: 1.8 % or more and 3.5 % or less, Cu: 1.5 % or more and 3.5 % or less, Ni: 2.5 % or more and 6.0 % or less, Al: 0.10 % or less, N: 0.10 % or less, O: 0.010 % or less, W: 0.5 % or more and 2.0 % or less, and Co: 0.01 % or more and 1.5 % or less where C, Si, Mn, Cr, Ni, Mo, Cu, and N satisfy a specific relationship; and a microstructure containing, in volume fraction, 25 % or more martensite phase, 65 % or less ferrite phase, and 40 % or less retained austenite phase. According to PTL 4, such a high-strength stainless steel seamless pipe for oil wells has a strength of 758 MPa or more in yield stress YS, and exhibits sufficient corrosion resistance even in high-temperature severe corrosion environments containing $CO_2$, $Cl^-$, and $H_2S$.

WO 2021/187330 A1 (PTL 5) proposes a high-strength stainless steel seamless pipe for oil wells having: a composition containing, in mass%, C: 0.06 % or less, Si: 1.0 % or less, Mn: 0.01 % or more and 1.0 % or less, P: 0.05 % or less, S: 0.005 % or less, Cr: 15.2 % or more and 18.5 % or less, Mo: 1.5 % or more and 4.3 % or less, Cu: 1.1 % or more and 3.5 % or less, Ni: 3.0 % or more and 6.5 % or less, Al: 0.10 % or less, N: 0.10 % or less, O: 0.010 % or less, and Sn: 0.001 % or more and 1.000 % or less where C, Si, Mn, Cr, Ni, Mo, Cu, and N satisfy a specific relationship; and a microstructure containing, in volume fraction, 30 % or more martensite phase, 65 % or less ferrite phase, and 40 % or less retained austenite phase. According to PTL 5, such a high-strength stainless steel seamless pipe for oil wells has a strength of 758 MPa or more in yield stress YS, and exhibits sufficient corrosion resistance even in high-temperature severe corrosion

environments containing $CO_2$ and $Cl^-$.

WO 2021/187331 A1 (PTL 6) proposes a high-strength stainless steel seamless pipe for oil wells having: a composition containing, in mass%, C: 0.06 % or less, Si: 1.0 % or less, Mn: 0.01 % or more and 1.0 % or less, P: 0.05 % or less, S: 0.005 % or less, Cr: 15.2 % or more and 18.5 % or less, Mo: 1.5 % or more and 4.3 % or less, Cu: 1.1 % or more and 3.5 % or less, Ni: 3.0 % or more and 6.5 % or less, Al: 0.10 % or less, N: 0.10 % or less, O: 0.010 % or less, and Sb: 0.001 % or more and 1.000 % or less where C, Si, Mn, Cr, Ni, Mo, Cu, and N satisfy a specific relationship; and a microstructure containing, in volume fraction, 30 % or more martensite phase, 65 % or less ferrite phase, and 40 % or less retained austenite phase. According to PTL 6, such a high-strength stainless steel seamless pipe for oil wells has a strength of 758 MPa or more in yield stress YS, and exhibits sufficient corrosion resistance even in high-temperature severe corrosion environments containing $CO_2$, $Cl^-$, and $H_2S$.

CITATION LIST

Patent Literature

PTL 1: WO 2013/146046 A1
PTL 2: WO 2017/168874 A1
PTL 3: WO 2018/155041 A1
PTL 4: WO 2021/065263 A1
PTL 5: WO 2021/187330 A1
PTL 6: WO 2021/187331 A1

SUMMARY

(Technical Problem)

The conventional techniques proposed in PTL 1 to PTL 6 can improve the corrosion resistance of stainless steel, but the performance is still insufficient.

As mentioned above, steel pipes for oil wells are required to have not only excellent yield stress and low-temperature toughness but also high corrosion resistance to withstand use in severe corrosion environments.

For example, steel pipes for oil wells are required to have excellent corrosion resistance in carbon dioxide environments ($CO_2$ corrosion resistance), and particularly required to have excellent $CO_2$ corrosion resistance even in high-temperature environments.

Steel pipes for oil wells are also required to have resistance (SSC resistance) to sulfide stress cracking (SSC) in hydrogen sulfide environments. Particularly in offshore oil fields, cold seawater has a high specific gravity and stays near the seabed, so that the pipes for oil wells are exposed to temperatures lower than the atmospheric temperature of the region. Accordingly, steel pipes for oil wells are required to have excellent SSC resistance even in low-temperature environments.

There are cases where, when extracting petroleum, the properties (mainly permeability) of the layer in which petroleum is stored (petroleum reservoir) are poor and sufficient production volume cannot be obtained, or the expected production volume cannot be obtained due to, for example, clogging in the reservoir. One way of improving productivity is acidizing, i.e. a treatment of injecting an acid such as hydrochloric acid into the reservoir. Steel pipes for oil wells are therefore also required to have excellent corrosion resistance in acid environments.

With the conventional techniques, however, it is impossible to obtain a steel pipe having sufficient levels of yield stress, low-temperature toughness, high-temperature $CO_2$ corrosion resistance, low-temperature SSC resistance, and corrosion resistance in acid environments.

In particular, the technique described in PTL 6 is supposed to provide high strength, high-temperature corrosion resistance, and corrosion resistance in acid environments, but the SSC resistance is not necessarily sufficient. The reason for this is considered as follows: If the phase fraction during steel pipe production is not appropriate, the hot workability is insufficient, and cracking occurs on the inner and outer surfaces of the steel pipe. In the case where such a steel pipe is used in an oil well, corrosive ions stay inside the cracks and further concentrate with the progress of corrosion. This causes insufficient SSC resistance.

It could therefore be helpful to provide a stainless steel seamless pipe having high strength of 758 MPa (110 ksi) or more in yield stress and excellent low-temperature toughness and corrosion resistance.

In the present disclosure, "excellent corrosion resistance" means excellent in all of high-temperature $CO_2$ corrosion resistance, low-temperature SSC resistance, and corrosion resistance in acid environments.

Herein, "excellent high-temperature $CO_2$ corrosion resistance" means that the corrosion rate when a test piece is immersed in a test liquid: 20 mass% NaCl aqueous solution (liquid temperature: 200 °C, 30 atm $CO_2$ gas atmosphere) held in an autoclave for an immersion time of 336 hours is 0.127 mm/y or less.

Moreover, "excellent low-temperature SSC resistance" means that, when a C-shaped test piece conforming to NACE TM0177 Method C is immersed in an aqueous solution obtained by adding acetic acid + sodium acetate to a 0.165 mass% NaCl aqueous solution (liquid temperature: 7 °C, 0.995 atm $CO_2$ gas, 0.005 atm $H_2S$ atmosphere) to adjust the pH to 3.0 for an immersion time of 720 hours under load of 100 % of yield stress as load stress, there is no cracking in the test piece after the test.

Moreover, "excellent corrosion resistance in acid environments" means that the corrosion rate when a test piece is immersed in a 15 mass% hydrochloric acid solution heated to 80 °C for an immersion time of 40 minutes is 600 mm/y or less.

Moreover, "excellent low-temperature toughness" means that the Charpy absorbed energy $vE_{-10}$ at -10 °C is 40 J or more. The Charpy absorbed energy $vE_{-10}$ is measured by the following procedure. First, three V-notch test pieces (10 mm thick) whose longitudinal direction is perpendicular to the pipe axis and whose notch is on a plane perpendicular to the pipe axis are collected per one stainless steel seamless pipe in accordance with ASTM E23. These test pieces are then subjected to a Charpy impact test at a test temperature of -10 °C, and the lowest value of the absorbed energies of the three test pieces is taken to be the Charpy absorbed energy $vE_{-10}$ at -10 °C.

Upon careful examination on various factors influencing the corrosion resistance, especially the SSC resistance and the corrosion resistance in acid environments, of stainless steel, we discovered that excellent corrosion resistance can be achieved by containing at least predetermined amounts of Cr, Mo, Sn, Co, and Ca and limiting the amount of Ni, which affects the phase fraction of steel, to a predetermined range.

The present disclosure is based on these discoveries and further studies. We thus provide the following.

1. A stainless steel seamless pipe comprising: a chemical composition containing (consisting of), in mass%, C: 0.06 % or less, Si: 1.0 % or less, Mn: 0.01 % or more and 1.0 % or less, P: 0.05 % or less, S: 0.005 % or less, Cr: 15.2 % or more and 18.0 % or less, Mo: 1.5 % or more and 4.3 % or less, Cu: 1.2 % or more and 3.5 % or less, Ni: 3.5 % or more and 5.2 % or less, V: 0.5 % or less, Al: 0.10 % or less, N: 0.10 % or less, O: 0.010 % or less, Sn: 0.001 % or more and 1.000 % or less, Co: 0.01 % or more and 1.00 % or less, and Ca: 0.001 % or more and 0.030 % or less, with a balance consisting of Fe and inevitable impurities; 30 % or more martensite phase, 50 % or less ferrite phase, and 40 % or less retained austenite phase in volume fraction; a yield stress of 758 MPa or more; and a Charpy absorbed energy $vE_{-10}$ at -10 °C of 40 J or more.

2. The stainless steel seamless pipe according to 1., wherein the chemical composition further contains, in mass%, at least one selected from the group consisting of Nb: 0.07 % or less, Ti: 0.2 % or less, W: 0.5 % or less, B: 0.01 % or less, Ta: 0.3 % or less, Zr: 0.3 % or less, REM: 0.3 % or less, Mg: 0.01 % or less, and Sb: 1.0 % or less.

3. The stainless steel seamless pipe according to 1. or 2., comprising: 50 % or more martensite phase, 50 % or less ferrite phase, and 25 % or less retained austenite phase in volume fraction; and a yield stress of 862 MPa or more.

4. A production method for a stainless steel seamless pipe, the production method comprising: making a seamless steel pipe from a steel material having the chemical composition according to 1. or 2.; heating the seamless steel pipe to a quenching temperature of 850 °C to 1150 °C; cooling the seamless steel pipe after the heating to a cooling stop temperature of 50 °C or less at a cooling rate of 0.01 °C/s or more; and heating the seamless steel pipe after the cooling to a tempering temperature of 500 °C to 650 °C, to produce a stainless steel seamless pipe having: 30 % or more martensite phase, 50 % or less ferrite phase, and 40 % or less retained austenite phase in volume fraction; a yield stress of 758 MPa or more; and a Charpy absorbed energy $vE_{-10}$ at -10 °C of 40 J or more.

5. The production method for a stainless steel seamless pipe according to 4., wherein the stainless steel seamless pipe has: 50 % or more martensite phase, 50 % or less ferrite phase, and 25 % or less retained austenite phase in volume fraction; and a yield stress of 862 MPa or more.

(Advantageous Effect)

It is thus possible to provide a stainless steel seamless pipe having high strength of 758 MPa (110 ksi) or more in yield stress and excellent low-temperature toughness and corrosion resistance.

DETAILED DESCRIPTION

The presently disclosed techniques will be described in detail below.

[Chemical composition]

A stainless steel seamless pipe according to the present disclosure has the foregoing chemical composition. First, the reasons for limiting the chemical composition will be described below. Hereafter, "mass%" is simply written as "%" unless otherwise noted.

C: 0.06 % or less

C is an element inevitably contained in the steelmaking process. If the C content is more than 0.06 %, the corrosion resistance decreases. The C content is therefore 0.06 % or less. The C content is preferably 0.05 % or less, more preferably 0.04 % or less, and further preferably 0.03 % or less. Since the C content is desirably as low as possible from the viewpoint of the corrosion resistance, no lower limit is placed on the C content. From the viewpoint of decarburization cost, however, the C content is preferably 0.002 % or more, more preferably 0.003 % or more, and further preferably 0.005 % or more.

Si: 1.0 % or less

Si is an element that acts as a deoxidizer. If the Si content is more than 1.0 %, the hot workability and the corrosion resistance decrease. The Si content is therefore 1.0 % or less, preferably 0.7 % or less, more preferably 0.5 % or less, and further preferably 0.4 % or less. Although no lower limit is placed on the Si content, the Si content is preferably 0.03 % or more, more preferably 0.05 % or more, and further preferably 0.1 % or more from the viewpoint of enhancing the deoxidizing effect.

Mn: 0.01 % to 1.0 %

Mn is an element that acts as a deoxidizing material and a desulfurizing material and improves the hot workability. To achieve its effect as a deoxidizing and desulfurizing material and improve the strength, the Mn content is 0.01 % or more, preferably 0.03 % or more, more preferably 0.05 % or more, and further preferably 0.1 % or more. If the Mn content is more than 1.0 %, the effect is saturated. The Mn content is therefore 1.0 % or less, preferably 0.8 % or less, more preferably 0.6 % or less, and further preferably 0.4 % or less.

P: 0.05 % or less

P is an element that decreases the $CO_2$ corrosion resistance and the SSC resistance. To achieve the desired corrosion resistance, the P content is 0.05 % or less, preferably 0.04 % or less, and more preferably 0.03 % or less. Since it is desirable to reduce the P content as much as possible, no lower limit is placed on the P content, and the P content may be 0 %. Since excessive reduction causes an increase in cost, the P content is preferably 0.005 % or more and more preferably 0.010 % or more from the viewpoint of cost.

S: 0.005 % or less

S is an element that significantly decreases the hot workability and hinders stable operation in the hot pipe making process. Moreover, S exists as sulfide-based inclusions in the steel, and decreases the corrosion resistance. The S content is therefore 0.005 % or less, preferably 0.004 % or less, more preferably 0.003 % or less, and further preferably 0.002 % or less. Since it is desirable to reduce the S content as much as possible, no lower limit is placed on the S content, and the S content may be 0 %. Since excessive reduction causes an increase in cost, the S content is preferably 0.0003 % or more and more preferably 0.0005 % or more from the viewpoint of cost.

Cr: 15.2 % to 18.0 %

Cr is an element that forms a protective coating on the steel pipe surface and contributes to improved corrosion resistance. If the Cr content is less than 15.2 %, the desired $CO_2$ corrosion resistance and SSC resistance cannot be ensured. The Cr content is therefore 15.2 % or more, preferably 15.5 % or more, more preferably 16.0 % or more, and further preferably 16.30 % or more. If the Cr content is more than 18.0 %, the ferrite fraction is excessively high, and the desired strength cannot be ensured. The Cr content is therefore 18.0 % or less, preferably 17.5 % or less, more preferably 17.2 % or less, and further preferably 17.0 % or less.

Mo: 1.5 % to 4.3 %

Mo stabilizes the protective coating on the steel pipe surface and increases the resistance to pitting corrosion caused by Cl⁻ and low pH, thus enhancing the corrosion resistance. To achieve the desired corrosion resistance, the Mo content is 1.5 % or more, preferably 1.8 % or more, more preferably 2.0 % or more, and further preferably 2.3 % or more. If the Mo content is more than 4.3 %, the ferrite fraction is excessively high, and the desired strength cannot be ensured. The Mo content is therefore 4.3 % or less, preferably 4.0 % or less, more preferably 3.5 % or less, and further preferably 3.0 % or less.

Cu: 1.2 % to 3.5 %

Cu has the effect of enhancing the $CO_2$ corrosion resistance and the SSC resistance by strengthening the protective coating on the steel pipe surface. To achieve the desired strength and corrosion resistance, in particular $CO_2$ corrosion resistance, the Cu content is 1.2 % or more, preferably 1.8 % or more, more preferably 2.0 % or more, and further preferably 2.3 % or more. If the Cu content is excessively high, the hot workability of the steel decreases and outer surface flaws occur during pipe making, making it impossible to achieve the desired SSC resistance. The Cu content is therefore 3.5 % or less, preferably 3.2 % or less, more preferably 3.0 % or less, and further preferably 2.7 % or less.

Ni: 3.5 % to 5.2 %

Ni improves the low-temperature toughness of the steel. Ni also contributes to an increased austenite fraction, and thus influences the hot workability during hot rolling. To achieve the desired toughness, the Ni content is 3.5 % or more, preferably 3.8 % or more, more preferably 4.0 % or more, and further preferably 4.3 % or more. If the Ni content is more than 5.2 %, the austenite fraction is excessively high, and the hot workability of the steel decreases. Consequently, flaws tend to occur during hot rolling, and the desired SSC resistance may not be achieved. The Ni content is therefore 5.2 % or less, and preferably 5.0 % or less.

V: 0.5 % or less

V is an element that forms carbonitrides to thus increase the strength without impairing the toughness. V also has the effect of improving the corrosion resistance. This is because, as a result of V preferentially forming carbonitrides, corrosion-resistant elements such as Cr are prevented from forming carbonitrides and consequently a decrease in the amount effective for the corrosion resistance is suppressed. If the V content is more than 0.5 %, the effect is saturated. The V content is therefore 0.5 % or less, preferably 0.2 % or less, and further preferably 0.1 % or less. Although no lower limit is placed on the V content, the V content is preferably 0.01 % or more, and more preferably 0.03 % or more.

Al: 0.10 % or less

Al is an element that acts as a deoxidizer. If the Al content is more than 0.10 %, the corrosion resistance decreases. The Al content is therefore 0.10 % or less, preferably 0.07 % or less, and more preferably 0.05 % or less. Although no lower limit is placed on the Al content, the Al content is preferably 0.005 % or more, more preferably 0.01 % or more, and further preferably 0.015 % or more from the viewpoint of enhancing the deoxidizing effect.

N: 0.10 % or less

N is an element that is inevitably contained in the steelmaking process but also enhances the strength of the steel. If the N content is more than 0.10 %, the amount of nitride formed is excessive and the corrosion resistance decreases. The N content is therefore 0.10 % or less, preferably 0.07 % or less, more preferably 0.05 % or less, and further preferably 0.03 % or less. Although no lower limit is placed on the N content, excessive reduction of the N content causes an increase in steelmaking cost. The N content is therefore preferably 0.002 % or more, more preferably 0.003 % or more, and further preferably 0.005 % or more.

O: 0.010 % or less

O (oxygen) exists as oxides in the steel, and accordingly adversely affects various properties. In the present disclosure, it is desirable to reduce the O content as much as possible. In particular, if the O content is more than 0.010 %, the hot workability and the corrosion resistance decrease. The O content is therefore 0.010 % or less. Since excessive reduction causes an increase in cost, the O content is preferably 0.00005 % or more and more preferably 0.001 % or more from the viewpoint of cost.

Sn: 0.001 % to 1.000 %

Sn is an element necessary to improve the corrosion resistance in acid environments. To achieve the desired corrosion resistance, the Sn content is 0.001 % or more, preferably 0.003 % or more, more preferably 0.005 % or more, and further preferably 0.010 % or more. If the Sn content is more than 1.000 %, the effect is saturated. The Sn content is therefore 1.000 % or less, preferably 0.500 % or less, more preferably 0.100 % or less, and further preferably 0.050 % or less.

Co: 0.01 % to 1.00 %

Co is an element that improves the corrosion resistance. To achieve the desired corrosion resistance, the Co content is 0.01 % or more, preferably 0.03 % or more, and more preferably 0.05 % or more. If the Co content is more than 1.00 %, the effect is saturated. The Co content is therefore 1.00 % or less, preferably 0.50 % or less, more preferably 0.30 % or less, and further preferably 0.10 % or less.

Ca: 0.001 % to 0.030 %

Ca is an element that improves the hot workability through sulfide morphological control, and suppresses flaws during pipe making to thus contributes to improved SSC resistance of the steel pipe. To achieve the effect, the Ca content is 0.001 % or more, preferably 0.003 % or more, more preferably 0.005 % or more, even more preferably more than 0.010 %, further preferably 0.012 % or more, and most preferably 0.014 % or more. If the Ca content is more than 0.030 %, the effect is saturated, and the effect commensurate with the amount cannot be expected. The Ca content is therefore 0.030 % or less, preferably 0.025 % or less, and more preferably 0.020 % or less.

In one embodiment of the present disclosure, a stainless steel seamless pipe has a chemical composition containing the foregoing components with the balance consisting of Fe and inevitable impurities.

In another embodiment of the present disclosure, the chemical composition may optionally further contain at least one selected from the group consisting of Nb, Ti, W, B, Ta, Zr, REM, Mg, and Sb. Nb, Ti, W, B, Ta, Zr, REM, Mg, and Sb are optional components, and the lower limits of the contents of these components may be 0 %.

Nb: 0.07 % or less

Nb is an element that forms carbonitrides and further improves the strength and the corrosion resistance, and may be optionally added. Since Nb carbonitrides tend to decrease the low-temperature toughness, in the case of adding Nb, the Nb content is 0.07 % or less, preferably 0.03 % or less, and more preferably 0.01 % or less. Regarding the lower limit, the Nb content may be 0 %, but is preferably 0.001 % or more from the viewpoint of enhancing the effect of the addition of Nb.

Ti: 0.2 % or less

Ti is an element that further improves the strength and the corrosion resistance, and may be optionally contained. If the Ti content is more than 0.2 %, the low-temperature toughness decreases. Accordingly, in the case of adding Ti, the Ti content is 0.2 % or less, preferably 0.05 % or less, and more preferably 0.01 % or less. Regarding the lower limit, the Ti content may be 0 %, but is preferably 0.001 % or more from the viewpoint of enhancing the effect of the addition of Ti.

W: 0.5 % or less

W is an element that contributes to improved strength of the steel and stabilizes the protective coating on the steel pipe surface to further enhance the corrosion resistance. If the W content is more than 0.5 %, the low-temperature toughness decreases. Accordingly, in the case of adding W, the W content is 0.5 % or less, preferably 0.3 % or less, and more preferably 0.2 % or less. No lower limit is placed on the W content and the W content may be 0 %, but the W content is preferably 0.05 % or more and more preferably 0.1 % or more.

B: 0.01 % or less

B is an element that contributes to improved hot workability and also has the effect of suppressing cracking in the pipe making process. If the B content is more than 0.01 %, the low-temperature toughness decreases. Accordingly, in the case of adding B, the B content is 0.01 % or less, preferably 0.007 % or less, and more preferably 0.005 % or less. No lower limit is placed on the B content and the B content may be 0 %, but the B content is preferably 0.0005 % or more and more preferably 0.001 % or more.

Ta: 0.3 % or less

Ta is an element that has the effect of further improving the strength and further improving the corrosion resistance, and may be optionally contained. If the Ta content is more than 0.3 %, the effect is saturated. Accordingly, in the case of adding Ta, the Ta content is 0.3 % or less. No lower limit is placed on the Ta content and the Ta content may be 0 %, but the Ta content is preferably 0.001 % or more.

Zr: 0.3 % or less

Zr is an element that further improves the strength, and may be optionally contained. Zr also has the effect of further improving the SSC resistance. If the Zr content is more than 0.3 %, the effect is saturated. Accordingly, in the case of adding Zr, the Zr content is 0.3 % or less. No lower limit is placed on the Zr content and the Zr content may be 0 %, but the Zr content is preferably 0.0005 % or more.

REM: 0.3 % or less

REM (rare earth metal) is an element that contributes to further improved SSC resistance through sulfide morphological control, and may be optionally contained. If the REM content is more than 0.3 %, the effect is saturated, and the effect commensurate with the amount cannot be expected. Accordingly, in the case of adding REM, the REM content is 0.3 % or less. No lower limit is placed on the REM content and the REM content may be 0 %, but the REM content is preferably 0.0005 % or more. In the present disclosure, "REM" includes scandium (Sc) with atomic number 21, yttrium (Y) with atomic number 39, and lanthanoids from lanthanum (La) with atomic number 57 to lutetium (Lu) with atomic number 71. The chemical composition of the stainless steel seamless pipe according to the present disclosure may optionally contain at least one of these REMs. In the present disclosure, the "REM content" is the total content of these elements.

Mg: 0.01 % or less

Mg is an element that further improves the corrosion resistance, and may be optionally contained. If the Mg content is more than 0.01 %, the effect is saturated, and the effect commensurate with the amount cannot be expected. Accordingly, in the case of adding Mg, the Mg content is 0.01 % or less. No lower limit is placed on the Mg content and the Mg content may be 0 %, but the Mg content is preferably 0.0005 % or more.

Sb: 1.0 % or less

Sb is an element that further improves the corrosion resistance, and may be optionally contained. If the Sb content is more than 1.0 %, the effect is saturated, and the effect commensurate with the amount cannot be expected. Accordingly, in the case of adding Sb, the Sb content is 1.0 % or less. No lower limit is placed on the Sb content and the Sb content may be 0 %, but the Sb content is preferably 0.001 % or more.

[Microstructure]

Next, the reasons for limiting the microstructure of the stainless steel seamless pipe according to the present disclosure will be described below.
The stainless steel seamless pipe according to an embodiment of the present disclosure contains 30 % or more martensite phase, 50 % or less ferrite phase, and 40 % or less retained austenite phase in volume fraction.

Martensite phase: 30 % or more

If the volume fraction of martensite phase is less than 30 %, the desired strength cannot be ensured. The volume fraction of martensite phase is therefore 30 % or more, preferably 40 % or more, more preferably 45 % or more, and further preferably 50 % or more. Although no upper limit is placed on the volume fraction of martensite phase, the volume fraction of martensite phase is preferably 90 % or less, and more preferably 85 % or less.

Ferrite phase: 50 % or less

As a result of ferrite phase being contained, the propagation of sulfide stress corrosion cracking and sulfide stress cracking can be suppressed, and excellent corrosion resistance can be achieved. If the volume fraction of ferrite phase is more than 50 %, the desired strength cannot be ensured. The volume fraction of ferrite phase is therefore 50 % or less, preferably 40 % or less, and more preferably 35 % or less. Although no lower limit is placed on the volume fraction of ferrite phase, the volume fraction of ferrite phase is preferably 10 % or more, more preferably 15 % or more, and further preferably 20 % or more.

Retained austenite phase: 40 % or less

The presence of retained austenite phase improves the ductility and the low-temperature toughness. However, if a large amount of austenite phase with a volume fraction exceeding 40 % precipitates, the desired strength cannot be ensured. The volume fraction of retained austenite phase is therefore 40 % or less, preferably 30 % or less, and more preferably 25 % or less. Although no lower limit is placed on the volume fraction of retained austenite phase, the volume fraction of retained austenite phase is preferably 3 % or more, and more preferably 5 % or more.

The volume fraction of each phase can be measured by the following method: First, a test piece for microstructure observation collected from a stainless steel seamless pipe is etched with Vilella's reagent (a reagent obtained by mixing picric acid, hydrochloric acid, and ethanol in proportions of 2 g, 10 ml, and 100 ml respectively). Following this, the microstructure of the test piece for microstructure observation is imaged using a scanning electron microscope (SEM) with 1000 magnification to obtain a SEM image. The obtained SEM image is analyzed using image analysis software (ImageJ 1.52p, National Institute of Health), and the microstructure proportion (area ratio (%)) of ferrite phase is calculated. In the analysis, the SEM image is binarized, and each region with low brightness is regarded as ferrite phase. The area ratio obtained by this procedure is defined as the volume fraction (%) of ferrite phase.

Next, a test piece for X-ray diffraction collected from the stainless steel seamless pipe is ground and polished so that a cross section (C section) orthogonal to the pipe axis direction will be the measurement plane, and the microstructure proportion of retained austenite (γ) phase is measured using an X-ray diffraction method. Specifically, the volume fraction of retained austenite phase is calculated from the integrated intensity of each of (220) plane of austenite and (211) plane of ferrite using the following formula:

$$V\gamma\ (\%) = 100/(1 + (I\alpha R\gamma/I\gamma R\alpha))$$

where Vγ is the volume fraction of retained austenite phase, Iα is the integrated intensity of (211) plane of ferrite, Iγ is the integrated intensity of (220) plane of austenite, Rα is the crystallographic theoretical calculation value (34.15) of α, and Rγ is the crystallographic theoretical calculation value (22.33) of γ.

The balance other than ferrite phase and retained γ phase calculated by the foregoing measurement method is the fraction of martensite phase. The method of observing each microstructure will be described in detail in the EXAMPLES section below.

The microstructure of the stainless steel seamless pipe according to the present disclosure substantially consists of martensite phase, ferrite phase, and retained austenite phase, as mentioned above. That is, the microstructure may contain other microstructures as long as the effects according to the present disclosure are not impaired. Examples of the other microstructures include intermetallic compounds and inclusions.

In other words, in one embodiment of the present disclosure, a stainless steel seamless pipe may comprise a microstructure containing, in volume fraction, 50 % or less ferrite phase and 40 % or less retained austenite phase with the balance substantially consisting of martensite phase, wherein the volume fraction of martensite phase is 30 % or more.

In another embodiment of the present disclosure, a stainless steel seamless pipe may comprise a microstructure consisting of, in volume fraction, 30 % or more martensite phase, 50 % or less ferrite phase, and 40 % or less retained austenite phase.

In either case, it is permissible for the microstructure to contain inevitable impurity phase.

Yield stress: 758 MPa or more

The stainless steel seamless pipe according to the present disclosure has a yield stress of 758 MPa or more. Although no upper limit is placed on the yield stress, the yield stress is preferably 1034 MPa or less. The yield stress can be measured by a tensile test. More specifically, the yield stress can be measured by the method described in the EXAMPLES section.

$vE_{-10}$: 40 J or more

The stainless steel seamless pipe according to the present disclosure has a Charpy absorbed energy $vE_{-10}$ at -10 °C of 40 J or more. Since the Charpy absorbed energy $vE_{-10}$ is desirably as high as possible, no upper limit is placed on the Charpy absorbed energy $vE_{-10}$. For example, the Charpy absorbed energy $vE_{-10}$ may be 300 J or less, and may be 250 J or less. The Charpy absorbed energy can be measured by a Charpy impact test. More specifically, the Charpy absorbed energy can be measured by the method described in the EXAMPLES section.

The stainless steel seamless pipe according to the present disclosure may be used for any purpose without limitation. The stainless steel seamless pipe according to the present disclosure is particularly suitable for use in oil wells. That is, the stainless steel seamless pipe according to an embodiment of the present disclosure is a stainless steel seamless pipe for oil wells (high-strength stainless steel seamless pipe for oil wells).

[Production method]

Next, a preferred production method for a stainless steel seamless pipe according to the present disclosure will be described below.

The stainless steel seamless pipe according to the present disclosure can be produced by making a seamless steel pipe from a steel material and subjecting the seamless steel pipe to quenching-tempering treatment under specific conditions.

The steel material is not limited, and may be any material. A billet is typically used as the steel material. As the steel material, a material having the foregoing chemical composition can be used.

The production method for the steel material is not limited, and the steel material can be produced by any method. For example, molten steel having the foregoing chemical composition is obtained by steelmaking using a converter or the like, and then a steel material such as a billet is produced by a method such as continuous casting or ingot casting and blooming.

[Pipe making]

The steel material is made into a seamless steel pipe. The pipe making method is not limited, and any method may be used. The pipe making is preferably performed by hot working. In the case of performing the pipe making by hot working, the steel material is heated and then hot worked into a seamless steel pipe. The heating temperature in the heating is not limited, but is preferably 1100 °C to 1350 °C from the viewpoint of achieving both the hot workability during the pipe making and the low-temperature toughness of the finished product at high levels.

The method of working the steel material into the seamless steel pipe is not limited, and any method may be used. For example, the seamless steel pipe can be obtained by any of the Mannesmann plug mill process and the Mannesmann mandrel mill process.

In the case of performing the pipe making by hot working, cooling treatment may be performed after the pipe making. The cooling treatment is not limited, and may be performed under any conditions. For example, it is preferable to, after the hot working, cool the seamless steel pipe to room temperature. The cooling rate in the cooling is not limited, and may be any rate. For example, the seamless steel pipe may be cooled at a cooling rate similar to that of air cooling.

[Quenching-tempering treatment]

The obtained seamless steel pipe is then subjected to heat treatment (quenching-tempering treatment) composed of quenching treatment and tempering treatment under specific conditions. The conditions in the quenching-tempering treatment will be described below.

- Quenching treatment

First, the seamless steel pipe is heated to a quenching temperature of 850 °C to 1150 °C, and the heated seamless steel pipe is cooled to a cooling stop temperature of 50 °C or less at a cooling rate of 0.01 °C/s or more.

Quenching temperature: 850 °C to 1150 °C

If the heating temperature (quenching temperature) in the quenching treatment is less than 850 °C, reverse transformation from martensite to austenite does not occur, and transformation from austenite to martensite does not occur during cooling, so that the desired strength cannot be ensured. The quenching temperature is therefore 850 °C or more, and preferably 900 °C or more. If the quenching temperature is more than 1150 °C, crystal grains coarsen, as a result of which the low-temperature toughness degrades. The quenching temperature is therefore 1150 °C or less, and preferably 1100 °C or less.

In the quenching treatment, after heating the seamless steel pipe to the quenching temperature, soaking treatment of holding the seamless steel pipe at the quenching temperature may be performed. The soaking treatment can make the temperature in the thickness direction of the seamless steel pipe uniform, and reduce variation in material property. The time (soaking time) for holding at the quenching temperature is not limited, but is preferably 5 minutes to 30 minutes.

Cooling rate: 0.01 °C/s or more

If the cooling rate in the quenching treatment is less than 0.01 °C/s, the desired microstructure cannot be obtained. The cooling rate is therefore 0.01 °C/s or more, preferably 1.0 °C/s or more, more preferably 5.0 °C/s or more, and further preferably 10.0 °C/s or more. Although no lower limit is placed on the cooling rate, the cooling rate is preferably 100 °C/s or less, more preferably 50 °C/s or less, and further preferably 30 °C/s or less.

The cooling is not limited, and may be performed by any method. For example, the cooling is preferably performed by at least one of air cooling and water cooling, and more preferably performed by water cooling.

Cooling stop temperature: 50 °C or less

If the cooling stop temperature is more than 50 °C, the desired microstructure cannot be obtained. In detail, if the cooling stop temperature is high, transformation from austenite to martensite is insufficient, and the volume fraction of retained austenite is excessively high. The cooling stop temperature in the quenching treatment is therefore 50 °C or less. No lower limit is placed on the cooling stop temperature, and the cooling stop temperature may be, for example, 0 °C or more. The cooling stop temperature herein is the surface temperature of the seamless steel pipe.

- Tempering treatment

The seamless steel pipe after the quenching treatment is then subjected to tempering treatment of heating to a tempering temperature of 500 °C to 650 °C.

Tempering temperature: 500 °C to 650 °C

If the tempering temperature is less than 500 °C, the tempering effect is insufficient, as a result of which the low-temperature toughness degrades. The tempering temperature is therefore 500 °C or more, and preferably 520 °C or more. If the tempering temperature is more than 650 °C, a large amount of intermetallic compounds precipitates, and excellent low-temperature toughness cannot be obtained. The tempering temperature is therefore 650 °C or less, and preferably 630 °C or less.

In the tempering treatment, after heating the seamless steel pipe to the tempering temperature, the seamless steel pipe may be held at the tempering temperature. The time (holding time) for holding at the tempering temperature is not limited, but is preferably 5 minutes or more from the viewpoint of making the temperature in the thickness direction uniform and preventing variation in material property. No upper limit is placed on the holding time, but the holding time is preferably 90 minutes or less.

After the tempering treatment, the seamless steel pipe can be allowed to naturally cool.

As a result of the quenching-tempering treatment, a stainless steel seamless pipe having the desired strength and excellent low-temperature toughness and corrosion resistance can be obtained.

EXAMPLES

The presently disclosed techniques will be described in more detail below by way of examples. The present disclosure is not limited to the following examples.

First, seamless steel pipes were made from steel materials having the chemical compositions shown in Tables 1 to 3 by the following procedure.

Each steel material was cast using molten steel having the chemical composition shown in Tables 1 to 3. The steel material was then heated, and hot worked using a model seamless mill into a seamless steel pipe of 177.8 mm in outer diameter and 16.0 mm in thickness, followed by air cooling. The heating temperature of the steel material before the hot working was 1250 °C.

The obtained seamless steel pipe was then subjected to quenching-tempering treatment under the following conditions to obtain a stainless steel seamless pipe.

- Quenching

The obtained seamless steel pipe was subjected to quenching treatment under the conditions shown in Tables 4 to 6. In detail, the seamless steel pipe was heated to the quenching temperature shown in Tables 4 to 6, and held at the quenching temperature for the soaking time shown in Tables 4 to 6. The seamless steel pipe was then cooled to the cooling stop temperature of 5 °C at the cooling rate shown in Tables 4 to 6. The cooling was performed by water cooling.

- Tempering

After this, the cooled seamless steel pipe was heated to the tempering temperature shown in Tables 4 to 6, and held at the tempering temperature for the holding time shown in Tables 4 to 6. The seamless steel pipe was then air-cooled (allowed to naturally cool). The cooling rate in the air cooling was 0.04 °C/s.

A test piece was collected from each obtained stainless steel seamless pipe, and microstructure observation, a tensile test, a Charpy impact test, and a corrosion resistance test were conducted. The test methods are as follows.

(1) Microstructure observation

A test piece for microstructure observation was collected from the obtained stainless steel seamless pipe so that a cross section including the pipe axis direction and the thickness direction would be the observation plane. The collected test piece for microstructure observation was etched with Vilella's reagent (a reagent obtained by mixing picric acid, hydrochloric acid, and ethanol in proportions of 2 g, 10 ml, and 100 ml respectively). The microstructure was imaged using a scanning electron microscope (SEM) with 1000 magnification to obtain a SEM image. The obtained SEM image was analyzed using image analysis software (ImageJ 1.52p, National Institute of Health), and the microstructure proportion (area ratio (%)) of ferrite phase was calculated. In the analysis, the SEM image was binarized, and each region with low brightness was regarded as ferrite phase. The area ratio obtained by this procedure was taken to be the volume fraction (%) of ferrite phase.

Moreover, a test piece for X-ray diffraction was collected from the obtained stainless steel seamless pipe, and ground and polished so that a cross section (C section) orthogonal to the pipe axis direction would be the measurement plane. The microstructure proportion of retained austenite (γ) phase was measured using an X-ray diffraction method. Specifically, the volume fraction of retained austenite phase was calculated from the integrated intensity of each of (220) plane of austenite and (211) plane of ferrite using the following formula:

$$V\gamma\ (\%) = 100/(1 + (I\alpha R\gamma/I\gamma R\alpha))$$

where Vγ is the volume fraction of retained austenite phase, Iα is the integrated intensity of (211) plane of ferrite, Iγ is the integrated intensity of (220) plane of austenite, Rα is the crystallographic theoretical calculation value (34.15) of α, and Rγ is the crystallographic theoretical calculation value (22.33) of γ.

The volume fraction of each phase obtained by the foregoing procedure is shown in Tables 4 to 6. The symbols M, F, and γ of the microstructures in Tables 4 to 6 respectively denote the following phases:

M: martensite phase
F: ferrite phase
γ: retained austenite phase.

(2) Tensile test

An arc-shaped tensile test piece was collected from the obtained stainless steel seamless pipe so that the pipe axis direction would be the tensile direction in accordance with API (American Petroleum Institute)-5CT. A tensile test was then conducted to determine the yield stress (YS). The stainless steel seamless pipe was rated pass as having high strength in the case where the yield stress YS was 758 MPa or more, and rated fail in the case where the yield stress YS was less than 758 MPa.

(3) Charpy impact test

A Charpy impact test was conducted by the following procedure to evaluate the low-temperature toughness.
First, a V-notch test piece (10 mm thick) whose longitudinal direction is perpendicular to the pipe axis and whose notch is on a plane perpendicular to the pipe axis was collected from the obtained stainless steel seamless pipe in accordance with ASTM E23. The test piece was subjected to a Charpy impact test at a test temperature of -10 °C. In the test, three test pieces were collected per one stainless steel seamless pipe, and the absorbed energy was measured for each test piece. The lowest value of the absorbed energies of the three test pieces was taken to be the Charpy absorbed energy $vE_{-10}$ at -10 °C. The stainless steel seamless pipe was rated pass in the case where $vE_{-10}$ was 40 J or more.

(4) $CO_2$ corrosion resistance test

The following test was conducted to evaluate the high-temperature $CO_2$ corrosion resistance.
A corrosion test piece of 3 mm in thickness, 30 mm in width, and 40 mm in length was machined from the obtained stainless steel seamless pipe. A corrosion test was conducted using the corrosion test piece, and the corrosion rate was measured as an index of the $CO_2$ corrosion resistance. In the corrosion test, the corrosion test piece was immersed in a test liquid: 20 mass% NaCl aqueous solution (liquid temperature: 200 °C, 30 atm $CO_2$ gas atmosphere) held in an autoclave for an immersion time of 14 days (336 hours). The weight of the corrosion test piece after the corrosion test was measured, and the premeasured weight of the test piece before the corrosion test was subtracted from the measured weight to yield the weight loss by the corrosion test. The weight loss was then divided by the surface area of the test piece used and the immersion time to obtain the weight loss per unit time and per unit area. The weight loss per unit time and per unit area was divided by the density of the steel to convert it into the corrosion thickness per unit time and per unit area. The corrosion thickness per unit time and per unit area (mm/y) thus obtained was taken to be the corrosion rate in carbon dioxide. The stainless steel seamless pipe was rated pass in the case where the corrosion rate was 0.127 mm/y or less, and rated fail in the case where the corrosion rate was more than 0.127 mm/y.

(5) SSC resistance test

The following test was conducted to evaluate the low-temperature SSC resistance.
A C-shaped test piece was machined from the obtained stainless steel seamless pipe in accordance with NACE TM0177 Method C, and an SSC resistance test was conducted. The curved surfaces corresponding to the inner and outer surfaces of the steel pipe were not ground or polished.
In the SSC resistance test, the C-shaped test piece conforming to NACE TM0177 Method C was immersed in an aqueous solution obtained by adding acetic acid + sodium acetate to a 0.165 mass% NaCl aqueous solution (liquid temperature: 7 °C, 0.995 atm $CO_2$ gas, 0.005 atm $H_2S$ atmosphere) to adjust the pH to 3.0 for an immersion time of 720 hours under load of 100 % of yield stress as load stress. The stainless steel seamless pipe was rated pass in the case where there was no cracking, and rated fail in the case where there was cracking. In Tables 4 to 6, "1" denotes pass and "2" denotes fail.

(6) Corrosion test in acid environment

The following test was conducted to evaluate the corrosion resistance in acid environments.
First, a rectangular parallelepiped test piece was machined from the obtained stainless steel seamless pipe. The test piece was 50 mm in length in the longitudinal direction of the steel pipe, 3 mm in thickness in the thickness direction of the steel pipe, and 25 mm in width. After measuring the weight of the test piece, a corrosion test was conducted by immersing, for 40 minutes, the test piece in a 15 mass% hydrochloric acid solution heated to 80 °C. The weight of the test piece after the corrosion test was measured, and the weight of the test piece before the corrosion test was subtracted from the measured weight to yield the weight loss by the corrosion test. The weight loss was then divided by the surface area of the test piece used and the immersion time in the corrosion test to obtain the weight loss per unit time and per unit area. The weight loss per unit time and per unit area was divided by the density of the steel to convert it into the corrosion thickness per unit time and per unit area. The corrosion thickness per unit time and per unit area (mm/y) thus obtained was taken to be the corrosion rate in acid environments. The stainless steel seamless pipe was rated pass in the case where the corrosion rate was 600 mm/y or less, and rated fail in the case where the corrosion rate was more than 600 mm/y.

(7) Hot workability

The following evaluation was conducted to evaluate the hot workability of the obtained stainless steel seamless pipe. The flaw depth on the surface of the test piece in the SSC resistance test corresponding to the outer surface of the steel pipe was measured by ultrasonic testing. Based on the maximum value of the flaw depth measured, the hot workability was evaluated in the following three levels:

1: maximum flaw depth of 0.1 mm or less
2: maximum flaw depth of more than 0.1 mm and 0.2 mm or less

3: maximum flaw depth of more than 0.2 mm.

The results are shown in Tables 4 to 6. As can be seen from the results in Tables 4 to 6, each stainless steel seamless pipe satisfying the conditions according to the present disclosure had high strength of 758 MPa (110 ksi) or more in yield stress and excellent low-temperature toughness and corrosion resistance. Regarding the corrosion resistance in particular, all of the high-temperature $CO_2$ corrosion resistance, the low-temperature SSC resistance, and the corrosion resistance in acid environments were excellent. Such a stainless steel seamless pipe according to the present disclosure is very suitable for various applications such as steel pipes for oil wells.

In each Example in which the Ca content was more than 0.010 %, the maximum value of the flaw depth was 0.1 mm or less. This results indicates that the hot workability is remarkably excellent especially in the case where the Ca content is more than 0.010 %. Hence, the low-temperature SSC resistance is even more excellent if the Ca content is more than 0.010 %.

[Table 1]

Table 1

| Steel sample ID | Chemical composition (mass%) * | | | | | | | | | | | | | | | | | Remarks |
|---|---|---|---|---|---|---|---|---|---|---|---|---|---|---|---|---|---|---|
| | C | Si | Mn | P | S | Cr | Mo | Cu | Ni | v | Al | N | O | Sn | Co | Ca | Others | |
| A | 0.010 | 0.29 | 0.29 | 0.015 | 0.0012 | 16.70 | 2.49 | 2.54 | 4.68 | 0.051 | 0.022 | 0.014 | 0.001 | 0.0197 | 0.06 | 0.0139 | - | Conforming steel |
| B | 0.012 | 0.29 | 0.32 | 0.016 | 0.0010 | 16.59 | 2.54 | 2.44 | 4.46 | 0.049 | 0.019 | 0.012 | 0.002 | 0.0209 | 0.19 | 0.0127 | - | Conforming steel |
| C | 0.009 | 0.32 | 0.31 | 0.015 | 0.0011 | 16.70 | 2.46 | 2.47 | 4.59 | 0.049 | 0.021 | 0.015 | 0.002 | 0.0213 | 0.07 | 0.0133 | - | Conforming steel |
| D | 0.038 | 0.28 | 0.31 | 0.016 | 0.0012 | 16.71 | 2.50 | 2.47 | 4.55 | 0.050 | 0.020 | 0.013 | 0.002 | 0.0188 | 0.20 | 0.0133 | - | Conforming steel |
| E | 0.008 | 0.45 | 0.32 | 0.014 | 0.0011 | 16.64 | 2.56 | 2.50 | 4.73 | 0.050 | 0.020 | 0.012 | 0.001 | 0.0215 | 0.11 | 0.0134 | - | Conforming steel |
| F | 0.013 | 0.83 | 0.31 | 0.017 | 0.0018 | 16.71 | 2.52 | 2.60 | 4.66 | 0.048 | 0.022 | 0.016 | 0.002 | 0.0153 | 0.08 | 0.0163 | - | Conforming steel |
| G | 0.009 | 0.29 | 0.55 | 0.015 | 0.0009 | 16.65 | 2.47 | 2.45 | 4.65 | 0.051 | 0.018 | 0.013 | 0.002 | 0.0211 | 0.15 | 0.0113 | - | Conforming steel |
| H | 0.013 | 0.29 | 0.88 | 0.015 | 0.0007 | 16.60 | 2.54 | 2.54 | 4.62 | 0.049 | 0.022 | 0.013 | 0.002 | 0.0131 | 0.11 | 0.0081 | - | Conforming steel |
| I | 0.008 | 0.32 | 0.05 | 0.015 | 0.0009 | 16.63 | 2.52 | 2.55 | 4.66 | 0.050 | 0.018 | 0.013 | 0.002 | 0.0219 | 0.16 | 0.0118 | - | Conforming steel |
| J | 0.010 | 0.32 | 0.31 | 0.015 | 0.0008 | 17.56 | 2.46 | 2.55 | 4.52 | 0.049 | 0.020 | 0.011 | 0.002 | 0.0195 | 0.16 | 0.0122 | - | Conforming steel |
| K | 0.009 | 0.31 | 0.29 | 0.016 | 0.0010 | 15.51 | 2.52 | 2.55 | 4.66 | 0.050 | 0.022 | 0.013 | 0.002 | 0.0210 | 0.20 | 0.0126 | - | Conforming steel |
| L | 0.009 | 0.28 | 0.31 | 0.015 | 0.0008 | 16.70 | 2.91 | 2.49 | 4.40 | 0.051 | 0.019 | 0.013 | 0.001 | 0.0186 | 0.15 | 0.0125 | - | Conforming steel |
| M | 0.011 | 0.29 | 0.29 | 0.016 | 0.0009 | 16.66 | 1.84 | 2.45 | 4.51 | 0.050 | 0.019 | 0.012 | 0.001 | 0.0216 | 0.08 | 0.0142 | - | Conforming steel |
| N | 0.011 | 0.29 | 0.30 | 0.016 | 0.0010 | 16.65 | 2.49 | 3.02 | 4.68 | 0.049 | 0.021 | 0.013 | 0.001 | 0.0184 | 0.14 | 0.0111 | - | Conforming steel |
| O | 0.011 | 0.30 | 0.29 | 0.015 | 0.0011 | 16.64 | 2.45 | 1.47 | 4.57 | 0.051 | 0.019 | 0.012 | 0.003 | 0.0211 | 0.10 | 0.0114 | - | Conforming steel |
| P | 0.009 | 0.29 | 0.30 | 0.015 | 0.0010 | 16.69 | 2.52 | 2.53 | 5.00 | 0.052 | 0.019 | 0.014 | 0.001 | 0.0214 | 0.11 | 0.0139 | - | Conforming steel |
| Q | 0.008 | 0.31 | 0.31 | 0.015 | 0.0010 | 16.63 | 2.48 | 2.52 | 3.96 | 0.048 | 0.021 | 0.015 | 0.003 | 0.0211 | 0.16 | 0.0140 | - | Conforming steel |
| R | 0.011 | 0.29 | 0.33 | 0.017 | 0.0010 | 16.58 | 2.40 | 2.57 | 4.71 | 0.418 | 0.021 | 0.013 | 0.003 | 0.0140 | 0.08 | 0.0113 | - | Conforming steel |
| S | 0.010 | 0.28 | 0.31 | 0.016 | 0.0010 | 16.63 | 2.52 | 2.53 | 4.53 | 0.051 | 0.020 | 0.045 | 0.002 | 0.0205 | 0.16 | 0.0127 | - | Conforming steel |
| T | 0.011 | 0.31 | 0.32 | 0.015 | 0.0010 | 16.63 | 2.49 | 2.47 | 4.40 | 0.051 | 0.019 | 0.011 | 0.002 | 0.0550 | 0.20 | 0.0126 | - | Conforming steel |

* Balance consisting of Fe and inevitable impurities

EP 4 509 630 A1

[Table 2]

[Table 2]

Table 2

| Steel sample ID | Chemical composition (mass%) * | | | | | | | | | | | | | | | | | Remarks |
|---|---|---|---|---|---|---|---|---|---|---|---|---|---|---|---|---|---|---|
| | C | Si | Mn | P | S | Cr | Mo | Cu | Ni | V | Al | N | O | Sn | Co | Ca | Others | |
| U | 0.012 | 0.15 | 0.17 | 0.013 | 0.0010 | 16.58 | 2.29 | 2.40 | 4.58 | 0.058 | 0.029 | 0.011 | 0.002 | 0.7331 | 0.09 | 0.0087 | - | Conforming steel |
| V | 0.009 | 0.29 | 0.30 | 0.015 | 0.0011 | 16.68 | 2.54 | 2.45 | 4.55 | 0.051 | 0.020 | 0.015 | 0.001 | 0.0070 | 0.09 | 0.0149 | - | Conforming steel |
| W | 0.009 | 0.29 | 0.32 | 0.016 | 0.0009 | 16.70 | 2.53 | 2.50 | 4.59 | 0.049 | 0.019 | 0.011 | 0.003 | 0.0205 | 0.32 | 0.0138 | - | Conforming steel |
| X | 0.009 | 0.30 | 0.30 | 0.015 | 0.0010 | 16.69 | 2.50 | 2.46 | 4.62 | 0.049 | 0.019 | 0.013 | 0.001 | 0.0220 | 0.05 | 0.0144 | - | Conforming steel |
| Y | 0.010 | 0.31 | 0.29 | 0.015 | 0.0011 | 16.70 | 2.51 | 2.50 | 4.70 | 0.048 | 0.018 | 0.013 | 0.003 | 0.0197 | 0.13 | 0.0037 | - | Conforming steel |
| Z | 0.011 | 0.30 | 0.28 | 0.016 | 0.0010 | 16.70 | 2.47 | 2.52 | 4.67 | 0.048 | 0.019 | 0.014 | 0.002 | 0.0214 | 0.15 | 0.0115 | Nb:0.004, Ti:0.005 | Conforming steel |
| AA | 0.012 | 0.29 | 0.32 | 0.015 | 0.0009 | 16.67 | 2.55 | 2.44 | 4.53 | 0.049 | 0.018 | 0.013 | 0.003 | 0.0183 | 0.13 | 0.0138 | W:0.31, B:0.0019 | Conforming steel |
| AB | 0.010 | 0.29 | 0.29 | 0.015 | 0.0008 | 16.59 | 2.50 | 2.54 | 4.79 | 0.050 | 0.019 | 0.014 | 0.002 | 0.0210 | 0.05 | 0.0130 | REM:0.020 | Conforming steel |
| AC | 0.008 | 0.28 | 0.30 | 0.014 | 0.0009 | 16.69 | 2.44 | 2.49 | 4.74 | 0.049 | 0.022 | 0.014 | 0.001 | 0.0193 | 0.13 | 0.0150 | Nb:0.005 | Conforming steel |
| AD | 0.009 | 0.29 | 0.29 | 0.016 | 0.0013 | 16.58 | 2.44 | 2.52 | 4.63 | 0.048 | 0.023 | 0.014 | 0.002 | 0.0155 | 0.12 | 0.0090 | Ta:0.22, Zr:0.23 Mg:0.005, Sb:0.031 | Conforming steel |
| AE | <u>0.068</u> | 0.31 | 0.28 | 0.014 | 0.0010 | 16.65 | 2.52 | 2.55 | 4.41 | 0.049 | 0.021 | 0.014 | 0.003 | 0.0181 | 0.16 | 0.0123 | - | Comparative steel |
| AF | 0.011 | 0.30 | 0.30 | 0.015 | 0.0010 | <u>18.33</u> | 2.46 | 2.51 | 4.65 | 0.049 | 0.020 | 0.012 | 0.001 | 0.0189 | 0.08 | 0.0148 | - | Comparative steel |
| AG | 0.011 | 0.32 | 0.29 | 0.015 | 0.0009 | <u>14.72</u> | 2.55 | 2.49 | 4.61 | 0.049 | 0.019 | 0.014 | 0.001 | 0.0220 | 0.16 | 0.0148 | - | Comparative steel |

17

(continued)

| Steel sample ID | Chemical composition (mass%) * | | | | | | | | | | | | | | | | | Remarks |
|---|---|---|---|---|---|---|---|---|---|---|---|---|---|---|---|---|---|---|
| | C | Si | Mn | P | S | Cr | Mo | Cu | Ni | V | Al | N | O | Sn | Co | Ca | Others | |
| AH | 0.009 | 0.30 | 0.31 | 0.015 | 0.0008 | 16.61 | 4.82 | 2.53 | 4.42 | 0.050 | 0.018 | 0.015 | 0.002 | 0.0183 | 0.15 | 0.0117 | - | Comparative steel |
| AI | 0.010 | 0.28 | 0.29 | 0.016 | 0.0012 | 16.62 | 1.19 | 2.46 | 4.80 | 0.049 | 0.021 | 0.012 | 0.003 | 0.0215 | 0.17 | 0.0119 | - | Comparative steel |
| AJ | 0.011 | 0.28 | 0.32 | 0.015 | 0.0009 | 16.71 | 2.54 | 3.85 | 4.62 | 0.049 | 0.019 | 0.011 | 0.002 | 0.0198 | 0.16 | 0.0137 | - | Comparative steel |
| AK | 0.009 | 0.29 | 0.30 | 0.014 | 0.0009 | 16.67 | 2.56 | 0.76 | 4.52 | 0.052 | 0.021 | 0.013 | 0.002 | 0.0219 | 0.06 | 0.0146 | - | Comparative steel |
| AL | 0.011 | 0.32 | 0.32 | 0.015 | 0.0012 | 16.65 | 2.48 | 2.52 | 5.73 | 0.049 | 0.021 | 0.011 | 0.002 | 0.0190 | 0.14 | 0.0142 | - | Comparative steel |
| AM | 0.010 | 0.28 | 0.31 | 0.014 | 0.0012 | 16.60 | 2.53 | 2.52 | 3.12 | 0.048 | 0.022 | 0.014 | 0.003 | 0.0181 | 0.20 | 0.0143 | - | Comparative steel |
| AN | 0.008 | 0.30 | 0.28 | 0.015 | 0.0009 | 16.60 | 2.50 | 2.51 | 4.48 | 0.049 | 0.019 | 0.119 | 0.001 | 0.0206 | 0.08 | 0.0136 | - | Comparative steel |
| AO | 0.011 | 0.30 | 0.30 | 0.015 | 0.0009 | 16.63 | 2.44 | 2.56 | 4.54 | 0.048 | 0.019 | 0.013 | 0.002 | 0.0004 | 0.06 | 0.0120 | - | Comparative steel |

* Balance consisting of Fe and inevitable impurities

[Table 3]

[Table 3]

Table 3

| Steel sample ID | Chemical composition (mass%) * | | | | | | | | | | | | | | | | | Remarks |
|---|---|---|---|---|---|---|---|---|---|---|---|---|---|---|---|---|---|---|
| | C | Si | Mn | P | S | Cr | Mo | Cu | Ni | V | Al | N | O | Sn | Co | Ca | Others | |
| AP | 0.012 | 0.29 | 0.89 | 0.015 | 0.0008 | 16.59 | 2.55 | 2.52 | 4.62 | 0.049 | 0.022 | 0.014 | 0.002 | 0.0131 | 0.11 | 0.0131 | - | Conforming steel |
| AQ | 0.013 | 0.18 | 0.17 | 0.013 | 0.0010 | 16.60 | 2.29 | 2.40 | 4.58 | 0.058 | 0.029 | 0.011 | 0.002 | 0.7518 | 0.09 | 0.0111 | - | Conforming steel |
| AR | 0.010 | 0.29 | 0.30 | 0.016 | 0.0014 | 16.58 | 2.44 | 2.55 | 4.63 | 0.050 | 0.023 | 0.014 | 0.002 | 0.0155 | 0.12 | 0.0105 | Ta:0.22, Zr:0.23 Mg:0.005, Sb:0.031 | Conforming steel |
| AS | 0.011 | 0.30 | 0.29 | 0.016 | 0.0012 | 16.58 | 2.49 | 2.54 | 4.70 | 0.051 | 0.022 | 0.015 | 0.001 | 0.0110 | 0.06 | - | - | Conforming steel |
| * Balance consisting of Fe and inevitable impurities | | | | | | | | | | | | | | | | | | |

[Table 4]

[Table 4]

Table 4

| No. | Steel sample ID | Production conditions | | | | | Measurement results | | | | | | | | | Hot workability | Remarks |
|---|---|---|---|---|---|---|---|---|---|---|---|---|---|---|---|---|---|
| | | Quenching treatment | | | Tempering treatment | | Microstructure (volume fraction) | | | Strength | Low-temperature toughness | Corrosion resistance | | | | |
| | | Quenching temperature (°C) | Soaking time (min) | Cooling rate (°C/s) | Tempering temperature (°C) | Holding time (min) | M (%) | F (%) | γ (%) | Yield stress YS (MPa) | $vE_{-10}$ (J) | Corrosion rate in carbon dioxide (mm/y) | SSC resistance | Corrosion rate in acid environment (mm/y) | | |
| 1 | A | 930 | 20 | 11 | 575 | 30 | 73 | 21 | 6 | 969 | 220 | 0.060 | 1 | 588 | 1 | Example |
| 2 | B | 930 | 20 | 11 | 575 | 30 | 69 | 25 | 6 | 968 | 209 | 0.054 | 1 | 586 | 1 | Example |
| 3 | C | 930 | 20 | 11 | 575 | 30 | 72 | 23 | 5 | 977 | 212 | 0.058 | 1 | 587 | 1 | Example |
| 4 | D | 930 | 20 | 11 | 575 | 30 | 67 | 20 | 13 | 932 | 207 | 0.075 | 1 | 593 | 1 | Example |
| 5 | E | 930 | 20 | 11 | 575 | 30 | 61 | 26 | 13 | 932 | 100 | 0.077 | 1 | 593 | 1 | Example |
| 6 | F | 930 | 20 | 11 | 575 | 30 | 50 | 30 | 20 | 903 | 178 | 0.055 | 1 | 589 | 1 | Example |
| 7 | G | 930 | 20 | 11 | 575 | 30 | 68 | 18 | 14 | 928 | 214 | 0.052 | 1 | 586 | 1 | Example |
| 8 | H | 930 | 20 | 11 | 575 | 30 | 62 | 16 | 22 | 900 | 173 | 0.055 | 1 | 588 | 2 | Example |
| 9 | I | 930 | 20 | 11 | 575 | 30 | 70 | 27 | 3 | 983 | 189 | 0.061 | 1 | 588 | 1 | Example |
| 10 | J | 930 | 20 | 11 | 575 | 30 | 54 | 29 | 17 | 920 | 113 | 0.039 | 1 | 582 | 1 | Example |
| 11 | K | 930 | 20 | 11 | 575 | 30 | 72 | 21 | 7 | 962 | 220 | 0.077 | 1 | 593 | 1 | Example |
| 12 | L | 930 | 20 | 11 | 575 | 30 | 56 | 29 | 15 | 927 | 122 | 0.049 | 1 | 585 | 1 | Example |
| 13 | M | 930 | 20 | 11 | 575 | 30 | 76 | 21 | 3 | 990 | 197 | 0.065 | 1 | 590 | 1 | Example |
| 14 | N | 930 | 20 | 11 | 575 | 30 | 69 | 17 | 14 | 934 | 212 | 0.038 | 1 | 581 | 1 | Example |
| 15 | O | 930 | 20 | 11 | 575 | 30 | 70 | 25 | 5 | 970 | 184 | 0.068 | 1 | 590 | 1 | Example |
| 16 | P | 930 | 20 | 11 | 575 | 30 | 62 | 20 | 18 | 909 | 200 | 0.053 | 1 | 586 | 1 | Example |
| 17 | Q | 930 | 20 | 11 | 575 | 30 | 67 | 29 | 4 | 985 | 73 | 0.065 | 1 | 590 | 1 | Example |
| 18 | R | 930 | 20 | 11 | 575 | 30 | 51 | 31 | 18 | 949 | 132 | 0.050 | 1 | 590 | 1 | Example |
| 19 | S | 930 | 20 | 11 | 575 | 30 | 51 | 31 | 18 | 908 | 222 | 0.068 | 1 | 590 | 1 | Example |

EP 4 509 630 A1

(continued)

| No. | Steel sample ID | Production conditions | | | | | Measurement results | | | | | | | | | Hot workability | Remarks |
|---|---|---|---|---|---|---|---|---|---|---|---|---|---|---|---|---|---|
| | | Quenching treatment | | | Tempering treatment | | Microstructure (volume fraction) | | | Strength | Low-temperature toughness | Corrosion resistance | | | | | |
| | | Quenching temperature (°C) | Soaking time (min) | Cooling rate (°C/s) | Tempering temperature (°C) | Holding time (min) | M (%) | F (%) | γ (%) | Yield stress YS (MPa) | $vE_{-10}$ (J) | Corrosion rate in carbon dioxide (mm/y) | SSC resistance | Corrosion rate in acid environment (mm/y) | | | |
| 20 | T | 930 | 20 | 11 | 575 | 30 | 72 | 22 | 6 | 967 | 201 | 0.043 | 1 | 583 | 1 | Example |
| 21 | U | 930 | 20 | 11 | 575 | 30 | 57 | 24 | 19 | 920 | 121 | 0.050 | 1 | 568 | 2 | Example |
| 22 | v | 930 | 20 | 11 | 575 | 30 | 70 | 25 | 5 | 974 | 202 | 0.052 | 1 | 586 | 1 | Example |
| 23 | W | 930 | 20 | 11 | 575 | 30 | 74 | 22 | 4 | 977 | 211 | 0.062 | 1 | 589 | 1 | Example |
| 24 | X | 930 | 20 | 11 | 575 | 30 | 72 | 23 | 5 | 972 | 211 | 0.072 | 1 | 592 | 1 | Example |
| 25 | Y | 930 | 20 | 11 | 575 | 30 | 70 | 24 | 6 | 971 | 107 | 0.064 | 1 | 589 | 1 | Example |
| 26 | Z | 930 | 20 | 11 | 575 | 30 | 71 | 23 | 6 | 969 | 222 | 0.053 | 1 | 586 | 1 | Example |
| 27 | AA | 930 | 20 | 11 | 575 | 30 | 70 | 23 | 7 | 969 | 200 | 0.062 | 1 | 589 | 1 | Example |

[Table 5]

[Table 5]

Table 5

| No. | Steel sample ID | Production conditions | | | | | Measurement results | | | | | | | | Hot workability | Remarks |
|---|---|---|---|---|---|---|---|---|---|---|---|---|---|---|---|---|
| | | Quenching treatment | | | Tempering treatment | | Microstructure (volume fraction) | | | Strength | Low-temperature toughness | Corrosion resistance | | | | |
| | | Quenching temperature (°C) | Soaking time (min) | Cooling rate (°C/s) | Tempering temperature (°C) | Holding time (min) | M (%) | F (%) | γ (%) | Yield stress YS (MPa) | vE_{-10} (J) | Corrosion rate in carbon dioxide (mm/y) | SSC resistance | Corrosion rate in acid environment (mm/y) | | |
| 28 | AB | 930 | 20 | 11 | 575 | 30 | 73 | 22 | 5 | 978 | 207 | 0.051 | 1 | 585 | 1 | Example |
| 29 | AC | 930 | 20 | 11 | 575 | 30 | 70 | 24 | 6 | 975 | 205 | 0.050 | 1 | 585 | 1 | Example |
| 30 | AD | 930 | 20 | 11 | 575 | 30 | 53 | 31 | 16 | 911 | 184 | 0.053 | 1 | 589 | 2 | Example |
| 31 | AE | 930 | 20 | 11 | 575 | 30 | 45 | 18 | 37 | 817 | 228 | 0.139 | 2 | 612 | 1 | Comparative Example |
| 32 | AF | 930 | 20 | 11 | 575 | 30 | 26 | 33 | 41 | 739 | 58 | 0.029 | 1 | 579 | 1 | Comparative Example |
| 33 | AG | 930 | 20 | 11 | 575 | 30 | 75 | 20 | 5 | 970 | 224 | 0.151 | 2 | 615 | 1 | Comparative Example |
| 34 | AH | 930 | 20 | 11 | 575 | 30 | 24 | 32 | 44 | 748 | 70 | 0.025 | 1 | 578 | 1 | Comparative Example |
| 35 | AI | 930 | 20 | 11 | 575 | 30 | 72 | 24 | 4 | 981 | 202 | 0.129 | 2 | 609 | 1 | Comparative Example |
| 36 | AJ | 930 | 20 | 11 | 575 | 30 | 61 | 21 | 18 | 912 | 184 | 0.041 | 2 | 582 | 1 | Comparative Example |
| 37 | AK | 930 | 20 | 11 | 575 | 30 | 71 | 24 | 5 | 978 | 171 | 0.140 | 2 | 590 | 1 | Comparative Example |
| 38 | AL | 930 | 20 | 11 | 575 | 30 | 71 | 17 | 12 | 937 | 220 | 0.051 | 2 | 585 | 1 | Comparative Example |
| 39 | AM | 930 | 20 | 11 | 575 | 30 | 62 | 35 | 3 | 989 | 32 | 0.049 | 1 | 585 | 1 | Comparative Example |

(continued)

| No. | Steel sample ID | Production conditions | | | | | Measurement results | | | | | | | | | Remarks |
|---|---|---|---|---|---|---|---|---|---|---|---|---|---|---|---|---|
| | | Quenching treatment | | | Tempering treatment | | Microstructure (volume fraction) | | | Strength | Low-temperature toughness | Corrosion resistance | | | Hot workability | |
| | | Quenching temperature (°C) | Soaking time (min) | Cooling rate (°C/s) | Tempering temperature (°C) | Holding time (min) | M (%) | F (%) | γ (%) | Yield stress YS (MPa) | vE$_{-10}$ (J) | Corrosion rate in carbon dioxide (mm/y) | SSC resistance | Corrosion rate in acid environment (mm/y) | | |
| 40 | AN | 930 | 20 | 11 | 575 | 30 | 45 | 20 | 35 | 822 | 162 | 0.134 | 2 | 610 | 1 | Comparative Example |
| 41 | AO | 930 | 20 | 11 | 575 | 30 | 72 | 24 | 4 | 976 | 214 | 0.044 | 1 | 629 | 1 | Comparative Example |
| 42 | A | 930 | 20 | 11 | 620 | 30 | 47 | 27 | 26 | 865 | 231 | 0.042 | 1 | 583 | 1 | Example |
| 43 | B | 930 | 20 | 11 | 620 | 30 | 43 | 29 | 28 | 860 | 226 | 0.052 | 1 | 586 | 1 | Example |
| 44 | C | 930 | 20 | 11 | 620 | 30 | 42 | 28 | 30 | 848 | 234 | 0.054 | 1 | 586 | 1 | Example |
| 45 | B | 930 | 10 | 11 | 575 | 20 | 69 | 24 | 7 | 970 | 219 | 0.052 | 1 | 586 | 1 | Example |
| 46 | B | 930 | 50 | 11 | 575 | 20 | 69 | 24 | 7 | 960 | 216 | 0.054 | 1 | 586 | 1 | Example |
| 47 | B | 930 | 20 | 0.06 | 575 | 20 | 58 | 23 | 19 | 873 | 140 | 0.060 | 1 | 589 | 1 | Example |
| 48 | B | 930 | 20 | 11 | 575 | 10 | 71 | 24 | 5 | 977 | 213 | 0.048 | 1 | 584 | 1 | Example |
| 49 | B | 930 | 20 | 11 | 575 | 80 | 59 | 24 | 17 | 917 | 225 | 0.059 | 1 | 588 | 1 | Example |
| 50 | B | 800 | 20 | 11 | 575 | 30 | 14 | 36 | 50 | 748 | 154 | 0.059 | 1 | 588 | 1 | Comparative Example |
| 51 | B | 1200 | 20 | 11 | 575 | 30 | 55 | 39 | 6 | 967 | 26 | 0.054 | 1 | 586 | 1 | Comparative Example |
| 52 | B | 930 | 20 | 11 | 470 | 30 | 71 | 25 | 4 | 978 | 26 | 0.049 | 1 | 585 | 1 | Comparative Example |
| 53 | B | 930 | 20 | 11 | 680 | 30 | 38 | 27 | 35 | 826 | 34 | 0.054 | 1 | 586 | 1 | Comparative Example |

EP 4 509 630 A1

26

[Table 6]

Table 6

| No. | Steel sample ID | Production conditions | | | | | Measurement results | | | | | | | | | | Remarks |
|---|---|---|---|---|---|---|---|---|---|---|---|---|---|---|---|---|---|
| | | Quenching treatment | | | Tempering treatment | | Microstructure (volume fraction) | | | Strength | Low-temperature toughness | Corrosion resistance | | | Hot workability | |
| | | Quenching temperature (°C) | Soaking time (min) | Cooling rate (°C/s) | Tempering temperature (°C) | Holding time (min) | M (%) | F (%) | $\gamma$ (%) | Yield stress YS (MPa) | $vE_{-10}$ (J) | Corrosion rate in carbon dioxide (mm/y) | SSC resistance | Corrosion rate in acid environment (mm/y) | | |
| 54 | AP | 930 | 20 | 11 | 575 | 30 | 63 | 17 | 20 | 905 | 170 | 0.052 | 1 | 585 | 1 | Example |
| 55 | AQ | 930 | 20 | 11 | 575 | 30 | 60 | 22 | 18 | 925 | 120 | 0.052 | 1 | 565 | 1 | Example |
| 56 | AR | 930 | 20 | 11 | 575 | 30 | 54 | 29 | 17 | 915 | 180 | 0.053 | 1 | 588 | 1 | Example |
| 57 | AS | 930 | 20 | 11 | 575 | 30 | 70 | 23 | 7 | 953 | 199 | 0.055 | 2 | 579 | 3 | Example |

**Claims**

1. A stainless steel seamless pipe comprising:

   a chemical composition containing, in mass%,
   C: 0.06 % or less,
   Si: 1.0 % or less,
   Mn: 0.01 % or more and 1.0 % or less,
   P: 0.05 % or less,
   S: 0.005 % or less,
   Cr: 15.2 % or more and 18.0 % or less,
   Mo: 1.5 % or more and 4.3 % or less,
   Cu: 1.2 % or more and 3.5 % or less,
   Ni: 3.5 % or more and 5.2 % or less,
   V: 0.5 % or less,
   Al: 0.10 % or less,
   N: 0.10 % or less,
   O: 0.010 % or less,
   Sn: 0.001 % or more and 1.000 % or less,
   Co: 0.01 % or more and 1.00 % or less, and
   Ca: 0.001 % or more and 0.030 % or less,
   with a balance consisting of Fe and inevitable impurities;
   30 % or more martensite phase, 50 % or less ferrite phase, and 40 % or less retained austenite phase in volume fraction;
   a yield stress of 758 MPa or more; and
   a Charpy absorbed energy $vE_{-10}$ at -10 °C of 40 J or more.

2. The stainless steel seamless pipe according to claim 1, wherein the chemical composition further contains, in mass%, at least one selected from the group consisting of

   Nb: 0.07 % or less,
   Ti: 0.2 % or less,
   W: 0.5 % or less,
   B: 0.01 % or less,
   Ta: 0.3 % or less,
   Zr: 0.3 % or less,
   REM: 0.3 % or less,
   Mg: 0.01 % or less, and
   Sb: 1.0 % or less.

3. The stainless steel seamless pipe according to claim 1 or 2, comprising:

   50 % or more martensite phase, 50 % or less ferrite phase, and 25 % or less retained austenite phase in volume fraction; and
   a yield stress of 862 MPa or more.

4. A production method for a stainless steel seamless pipe, the production method comprising:

   making a seamless steel pipe from a steel material having the chemical composition according to claim 1 or 2;
   heating the seamless steel pipe to a quenching temperature of 850 °C to 1150 °C;
   cooling the seamless steel pipe after the heating to a cooling stop temperature of 50 °C or less at a cooling rate of 0.01 °C/s or more; and
   heating the seamless steel pipe after the cooling to a tempering temperature of 500 °C to 650 °C, to produce a stainless steel seamless pipe having: 30 % or more martensite phase, 50 % or less ferrite phase, and 40 % or less retained austenite phase in volume fraction; a yield stress of 758 MPa or more; and a Charpy absorbed energy $vE_{-10}$ at -10 °C of 40 J or more.

5. The production method for a stainless steel seamless pipe according to claim 4, wherein the stainless steel seamless pipe has: 50 % or more martensite phase, 50 % or less ferrite phase, and 25 % or less retained austenite phase in volume fraction; and a yield stress of 862 MPa or more.

<table>
<tr><td colspan="2" align="center">**INTERNATIONAL SEARCH REPORT**</td><td colspan="2">International application No.<br>**PCT/JP2023/008929**</td></tr>
</table>

**A.    CLASSIFICATION OF SUBJECT MATTER**

*C22C 38/00*(2006.01)i; *C21D 8/10*(2006.01)i; *C21D 9/08*(2006.01)i; *C22C 38/52*(2006.01)i; *C22C 38/60*(2006.01)i
FI:    C22C38/00 302Z; C22C38/52; C22C38/60; C21D9/08 E; C21D8/10 D

According to International Patent Classification (IPC) or to both national classification and IPC

**B.    FIELDS SEARCHED**

Minimum documentation searched (classification system followed by classification symbols)

C22C38/00; C21D8/10; C21D9/08; C22C38/52; C22C38/60

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2021-161503 A (NIPPON STEEL CORP) 11 October 2021 (2021-10-11)<br>paragraphs [0050]-[0074], [0089]-[0096], [0106]-[0117], [0138], tables 2-3 | 2-5 |
| A | WO 2021/187330 A1 (JFE STEEL CORP) 23 September 2021 (2021-09-23) | 1-5 |
| A | WO 2014/112353 A1 (JFE STEEL CORP) 24 July 2014 (2014-07-24) | 1-5 |
| P, A | JP 7226675 B1 (JFE STEEL CORP) 21 February 2023 (2023-02-21) | 1-5 |

☐ Further documents are listed in the continuation of Box C.        ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br><br>**17 May 2023** | Date of mailing of the international search report<br><br>**30 May 2023** |
|---|---|
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

INTERNATIONAL SEARCH REPORT
Information on patent family members

International application No.

**PCT/JP2023/008929**

| Patent document cited in search report | | | Publication date (day/month/year) | Patent family member(s) | | | Publication date (day/month/year) |
|---|---|---|---|---|---|---|---|
| JP | 2021-161503 | A | 11 October 2021 | (Family: none) | | | |
| WO | 2021/187330 | A1 | 23 September 2021 | CN | 115298343 | A1 | |
| | | | | BR | 112022018317 | A2 | |
| | | | | EP | 4123040 | A1 | |
| | | | | US | 2023/0137295 | A1 | |
| WO | 2014/112353 | A1 | 24 July 2014 | US | 2015/0354022 | A1 | |
| | | | | EP | 2947167 | A1 | |
| | | | | CN | 104937126 | A | |
| JP | 7226675 | B1 | 21 February 2023 | WO | 2023/053743 | A1 | |

Form PCT/ISA/210 (patent family annex) (January 2015)

**REFERENCES CITED IN THE DESCRIPTION**

**Patent documents cited in the description**

- WO 2013146046 A1
- WO 2017168874 A1
- WO 2018155041 A1
- WO 2021065263 A1
- WO 2021187330 A1
- WO 2021187331 A1